# EUROPÄISCHE PATENTSCHRIFT

(11) **EP 3 478 556 B1**
(45) Veröffentlichungstag und Bekanntmachung des Hinweises auf die Patenterteilung: **22.11.2023**
(21) Anmeldenummer: 17737758.7
(22) Anmeldetag: 03.07.2017
(51) Int. Cl.: B62B 7/12, A63G 19/00

(54) **SITZ-/LIEGEUNTERLAGE**
SEATING/LYING SUPPORT
SUPPORT D'ASSISE/DE COUCHAGE

(30) Priorität: 01.07.2016 DE 102016112086
(43) Veröffentlichungstag der Anmeldung: 08.05.2019
(73) Patentinhaber: Vollmar, Mariam, 95517 Seybothenreuth (DE)
(72) Erfinder: Vollmar, Mariam, 95517 Seybothenreuth (DE)
(74) Vertreter: Hannke Bittner & Partner mbB Regensburg
(86) Internationale Anmeldenummer: PCT/EP2017/066463
(87) Internationale Veröffentlichungsnummer: WO 2018/002381

(56) Entgegenhaltungen:
- DE-A1- 4 207 639
- DE-C- 465 914
- GB-A- 191 321 975
- US-A- 1 353 340
- US-A- 4 772 070

## Beschreibung

### Technisches Gebiet

Die Erfindung bezieht sich auf eine Sitz-/Liegeunterlage.

### Stand der Technik

Sitz-/Liegeunterlagen sind insbesondere als Bestandteil von Kinderwägen in unterschiedlichen Ausführungsformen allgemein bekannt. So gibt es neben den für Neugeborene und Säuglinge gebräuchlichen Liegekinderwägen mit Liegeschale beispielsweise auch so genannte Sitzkinderwägen in denen Kleinkinder in einer im Wesentlichen aufrechten Haltung sitzen können. Bei diesen Ausführungsformen ist es meist möglich, über einen Verstell- oder Klappmechanismus beispielsweise eine vorhandene Rückenlehne und optional eine Fußstütze so einzustellen, dass das gegebenenfalls Kind auch eine Liege- bzw. Schlafposition einnehmen kann.

Ein typischer Kinderwagen umfasst dabei ein Fahrgestell mit einem Schiebegriff, wobei das Fahrgestell mit der Liege-und/oder Sitzvorrichtung verbunden ist und in der Regel drei oder vier Laufräder aufweist. Die Laufräder sind dabei meist an einer feststehenden Radachse drehbar aufgehängt. Bei den meisten bekannten Ausführungsformen ist ferner an der Liege-und/oder Sitzvorrichtung oder am Fahrgestell ein verstellbares Verdeck vorgesehen, welches als Lichtschutz und/oder als Wind- und Regenschutz dient.

Aus dem Stand der Technik sind auch schiebbare Dreiräder oder schiebbare Rutschautos bekannt, um Kinder transportieren zu können und gleichzeitig die eigene Bewegung der Kinder anzuregen. Diese schiebbaren Dreiräder oder Rutschautos übernehmen dabei sowohl eine Spiel- als auch eine Transportfunktion.

Ferner ist aus der CN 8620816 U ein Kinderwagen für Kleinkinder bekannt, bei dem die Sitzvorrichtung in Form eines Pferdes ausgebildet ist und bei dem das Fahrgestell ein komplexes Antriebsgestänge umfasst, über das die Räder in Bewegung versetzt werden können. Das Antriebsgestänge ist dabei so ausgebildet, dass bei einer wiederkehrenden, abwechselnd vor- und rückwärts gerichteten Bewegung des Pferdekopfes eine sequentielle Bewegung der Räder erzeugt wird, über die eine Schrittbewegung eines Pferdes nachgestellt wird. Nachteilig an dem Kinderwagen der CN 8620816 U erweist sich jedoch, dass die Schrittbewegung des Pferdes durch wiederholtes Ziehen und Schieben am Kopf erzeugt bzw. nachgeahmt wird. Dieses Bewegungsmuster entspricht jedoch keiner naturgetreuen Bewegung, wie sie beispielsweise beim Reiten erfolgt.

Ein die Körperspannung verbesserndes, aktives Sitzen der Kinder, wie es beispielsweise beim Reiten erfolgt, wird mit den bekannten Kinderwägen nicht gefördert, so dass es trotz der aus dem Stand der Technik bekannten Lösungen einen Bedarf gibt, Sitz- oder Aufsitzkinderwägen weiterzuentwickeln, um ein gesundes Sitzen und eine natürliche und kindgerechte Muskelstärkung zu erlauben und zu unterstützen.

### Darstellung der Erfindung

Aufgabe der vorliegenden Erfindung ist es daher einen Kinderwagen zur Verfügung zu stellen, der die Nachteile des Standes der Technik überwindet und insbesondere ein gesundes Sitzen unterstützt und auf möglichst spielerische und kindgerechte Weise eine Kräftigung der kindlichen Muskulatur, insbesondere der Rückenmuskulatur bewirkt. Diese Aufgabe wird erfindungsgemäß durch die Vorrichtung gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt eine Sitz-/Liegeunterlage gemäß Anspruch 1.

Besonders wird mit der vorliegenden Sitz-/Liegeunterlage ein gesundes Sitzen und Sitzen unterstützt und gefördert. Über die vorgesehene und dafür eingerichtete Verbindung der Lagerelemente mit den Sitz-/Liegeunterlagenelementen werden diese relativ zueinander bewegt, wodurch eine aufsitzende oder aufliegende Person angeregt wird, durch Aktivierung der körpereigenen Muskulatur, insbesondere der Rumpf- bzw. Rückenmuskulatur die Bewegungen der Sitz-/Liegeunterlage auszugleichen. Dies bewirkt schließlich eine Muskelkräftigung und Muskelstärkung und führt nicht zuletzt zu einer verbesserten Körperhaltung und kann somit schließlich Haltungsschäden vorbeugen.

Bevorzugt sind die Sitz-/Liegeunterlagenelemente über dafür vorgesehene elastische Elemente insbesondere über Federelemente beweglich miteinander verbunden. Als elastische Elemente können jegliche Art von bandförmigen, stab- oder leistenförmigen, oder im Wesentlichen kugelförmigen oder ovalen Elementen aus einem elastischen Material Verwendung finden, solange durch diese Elemente eine bewegliche aber sichere Verbindung der Sitz-/Liegeunterlagenelemente hergestellt ist. Besonders bevorzugt werden Federelemente mit einer vorgegebenen Feder- oder Spannkraft zur beweglichen Verbindung der Sitz-/Liegeunterlagenelemente verwendet. Um insbesondere bei der Verwendung von Federelementen einer potentiellen Verletzungsgefahr vorzubeugen, sind die Federelemente bevorzugt mit einem Überzug versehen, beispielsweise mit einem Überzug aus Textil.

Bei den Lagerelementen kann es sich beispielsweise um Gestellstreben eines Sitz-/Liegewagens, insbesondere eines Kinderwagens, um Standbeine oder um elastische Verbindungselemente handeln. Gemäß dem vorliegenden Verständnis dient ein Lagerelement als Auflager für die Sitz-/Liegeunterlagenelemente.

Gemäß der Erfindung ist jedes der beweglich miteinander verbundenen Sitz-/Liegeunterlagenelemente über jeweils zumindest ein elastisches Verbindungselement, insbesondere Kautschukelement, mit einem kugelförmigen Unterteil verbunden, wobei das kugelförmige Unterteil beweglich in einer hohlkugelförmigen Schale gelagert ist und die hohlkugelförmige Schale mit zumindest einem Standelement zum Aufstellen auf einer Unterlage verbunden ist. Besonders bevorzugt ist dabei das zumindest eine Standelement mit einem Federelement ausgestattet. In dieser Ausführungsform kommt die vorliegende Sitz-/Liegeunterlage als eine auf einer Kugel gelagerten Sitzfläche eines Stuhls zum Einsatz.

Gemäß einer alternativen bevorzugten Ausführungsform der Erfindung ist die Sitz-/Liegeunterlage mit einer Rückenlehne verbunden, wobei jedes der beweglich miteinander verbundenen Sitz-/Liegeunterlagenelemente mit zumindest einem Standbein zum Aufstellen auf einer Unterlage verbunden ist. In dieser Ausführungsform kommt die vorliegende Sitz-/Liegeunterlage ebenfalls als Sitzfläche eines Stuhls zum Einsatz.

Bevorzugt kann dabei zumindest ein Standbein mit einem Federelement ausgestattet sein. Besonders bevorzugt können die Standbeine dabei derart mit zumindest einem Antriebselement verbunden sein, dass die Standbeine durch das Antriebselement unabhängig voneinander in eine Auf- und Abwärtsbewegung versetzbar sind. Bei der Auf- und Abwärtsbewegung handelt es sich bevorzugt um ein komplexeres Bewegungsmuster mit beliebig kombinierbaren vertikalen und horizontalen Richtungskomponenten, so dass die Auf- und Abwärtsbewegungen vorliegend als dreidimensionales Bewegungsmuster verstanden werden. Das dreidimensionale Bewegungsmuster weist beispielsweise auf-, ab, vor- und rückwärts gerichtete Richtungskomponenten auf und kann besonders bevorzugt auch laterale Bewegungskomponenten oder Kippbewegungen umfassen. Die mittels des Antriebselementes erzeugten Auf- und Abwärtsbewegungen der Standbeine werden unmittelbar auf die Sitz-/Liegeunterlagenelemente übertragen bzw. in diese eingeleitet, so dass die Bewegung der Sitz-/Liegeunterlage antreibbar, vorzugsweise steuerbar ist. Mit dieser Ausführungsform wird ein Stuhl zur Verfügung gestellt, der vorteilhafterweise in physiotherapeutischen Behandlungen einsetzbar ist.

Die vorliegende Erfindung stellt auch einen Sitz-/Liegewagen mit einer wie oberhalb definierten Sitz-/Liegeunterlage zur Verfügung, wobei der Sitz-/Liegewagen zumindest ein Fahrgestell und zumindest eine mit der Sitz-/Liegeunterlage ausgestattete und an das Fahrgestell gekoppelte Sitz-/Liegevorrichtung aufweist. Das Fahrgestell umfasst dabei wenigstens zwei Radstangen und mit den Radstangen verbundene Laufräder. Jedes der beweglich miteinander verbundenen Sitz-/Liegeunterlagenelemente der Sitz-/Liegeunterlage ist über zumindest eine Gestellstrebe an das Fahrgestell gekoppelt. Der Sitz-/Liegewagen gemäß der Erfindung zeichnet sich insbesondere dadurch aus, dass jede Radstange um eine Drehachse der verbundenen Laufräder drehbar ist und mit zumindest einer außerhalb der Drehachse angeordneten Kopplungseinrichtung für die Kopplung der Gestellstreben ausgestattet ist, wobei durch eine Drehbewegung der Laufräder eine Rotation der Radstangen erzeugbar ist und wobei mittels der Kopplung der Gestellstreben an die Kopplungseinrichtungen der Radstangen die erzeugte Rotation der Radstangen in gegenläufige Auf- und Abwärtsbewegungen der wenigstens vier beweglich miteinander verbundenen Sitz-/Liegeunterlagenelemente umgewandelt wird. Bei der Auf- und Abwärtsbewegung handelt es sich bevorzugt um ein komplexeres Bewegungsmuster mit vertikalen und horizontalen Richtungskomponenten, so dass die Auf- und Abwärtsbewegungen vorliegend als dreidimensionales Bewegungsmuster verstanden werden. Das dreidimensionale Bewegungsmuster weist beispielsweise auf-, ab, vor- und rückwärts gerichtete Richtungskomponenten auf und kann besonders bevorzugt auch laterale Bewegungskomponenten oder Kippbewegungen umfassen.

Bei dem vorliegenden Sitz-/Liegewagen handelt es sich insbesondere um einen für den Transport von Kindern geeigneten Wagen, beispielsweise um einen schiebbaren Kinderwagen oder um einen ziehbaren Kinderwagen, beispielsweise einen Kinder-Fahrradanhänger. Die Sitz-/Liegevorrichtung stellt dabei eine Liegefläche und/oder Sitzfläche bereit.

Unter Radstangen werden vorliegend Teile des Fahrgestells verstanden, die für die Radaufhängung vorgesehen sind und die vorzugsweise jeweils zwei Räder miteinander verbinden. Bei dem vorliegenden Sitz-/Liegewagen sind vorzugsweise eine vordere Radstange mit vorderen Laufrädern sowie eine hintere Radstange mit hinteren Laufrädern vorgesehen. Die Radstangen können gemäß dem vorliegenden Verständnis als Befestigungsvorrichtung bzw. Befestigungsstangen für die Laufräder verstanden werden, wobei die Laufräder so an den Radstangen befestigt sind, dass die Radstangen durch eine Drehbewegung der Laufräder in Rotation versetzt werden können. Eine Rotations- bzw. Drehachse der Radstange fällt dabei mit der Drehachse der Laufräder zusammen. Beispielsweise ist dieses beschriebene Rotieren der Radstange möglich durch fest mit der Radstange verbundene Laufräder, die gegen die Radstange feststehend und verdrehungsgesichert angebracht sind oder durch feststellbare Laufräder, die nur in einer vorgegebenen Feststellposition gegen die Radstange feststehend und verdrehungsgesichert angebracht sind. Im Sinne der vorliegenden Anmeldung können die Radstangen somit die Funktion einer Welle übernehmen. Im Falle von feststellbaren Laufrädern können die Radstangen in einer Leerlaufposition der Laufräder auch die Funktion einer einfachen, feststehenden Achse übernehmen.

Die Radstangen weisen ferner Kopplungseinrichtungen zur Kopplung der Gestellstreben auf, so dass die Radstangen daher auch als Kopplungsvorrichtung für die Sitz-/Liegevorrichtung dienen. Die außerhalb der Drehachse angeordneten Kopplungseinrichtungen können verschiedenartig ausgebildet sein und können vorliegend auch als Kopplungsstellen, Kopplungspunkte, Kopplungsstücke oder Kopplungselemente verstanden werden. Im Sinne der vorliegenden Erfindung sind die Radstangen mit den Kopplungseinrichtungen oder auch Kopplungsprofilen ausgestattet. Durch die an den Radstangen vorgesehenen Kopplungseinrichtungen muss dabei lediglich erfüllt sein, dass der tatsächliche Kopplungs- oder Ankoppelpunkt bzw. die Kopplungs- oder Ankoppelstelle außerhalb der Drehachse der Radstange liegt.

Beim Schieben oder Ziehen des Sitz-/Liegewagens werden die Laufräder durch die Vorwärtsbewegung in eine Drehbewegung versetzt. Bei dem vorliegenden Sitz-/Liegewagen können nun durch diese Drehbewegung der Laufräder die Radstangen ebenfalls in Rotation um dieselbe Drehachse versetzt werden. Mittels der außerhalb der Drehachse angeordneten Kopplungseinrichtungen der Radstangen ist die Sitz-/Liegevorrichtung derart an die Radstangen angekoppelt, dass die durch die Drehbewegung der Laufräder erzeugte Rotation der Radstangen in eine Bewegung der wenigstens zwei beweglich miteinander verbundenen Sitz-/Liegenunterlagenelemente umgewandelt bzw. umgesetzt oder übersetzt werden kann. Bei der Bewegung der Sitz-/Liegenunterlagenelemente handelt es sich dabei in erster Linie um Auf- und Abwärtsbewegungen, welche auch horizontale Bewegungskomponenten umfassen. Die Sitz-/Liegenunterlagenelemente werden dabei gegenläufig bzw. gegensinnig, das heißt jeweils entgegengesetzt zueinander aufwärts und abwärts bewegt.

Ganz besonders vorteilhaft kann mit dem vorliegenden Sitz-/Liegewagen während der Fortbewegung die Liege- und/oder Sitzfläche auf der ein Kind liegt oder sitzt durch die dabei erzeugten gegenläufigen Auf- und Abwärtsbewegungen der Sitz-/Liegenunterlagenelemente so in Bewegung versetzt werden, dass beispielsweise ein Schaukeln oder eine wellenartige Bewegung imitiert werden, so dass sich für das Kind beispielsweise ein beruhigendes Gefühl des "Getragen-Werdens" einstellt. Ferner wird darüber ein so genanntes aktives Sitzen unterstützt, bei dem das Kind über Aktivierung der Rumpfmuskulatur beispielsweise die Bewegungen der Sitz-/Liegefläche auszugleichen versucht.

Bevorzugt ist die Sitz-/Liegevorrichtung in Form eines Tierkörpers mit einem einen Aufsitzbereich bildenden Torso 6a ausgebildet, wobei die beweglich miteinander verbundenen Sitz-/Liegeunterlagenelemente als beweglich miteinander verbundene Torsoabschnitte ausgebildet sind. Es sind dabei vier beweglich miteinander verbundene Torsoabschnitte vorgesehen und bei den Gestellstreben zur Kopplung der Torsoabschnitte an die Radstangen des Fahrgestells handelt es sich um die mit dem Torso 6a verbundenen Extremitäten des Tierkörpers.

Bei dem bevorzugten Sitz-/Liegewagen mit der Sitzvorrichtung in Form eines Tierkörpers handelt es sich im Wesentlichen um einen Sitz- oder Aufsitzkinderwagen, bei dem das Kind im Reitersitz auf der in Form eines Tierkörpers ausgebildeten Sitzvorrichtung sitzen kann, beispielsweise wie auf einem kleinen Pony. Über die Extremitäten des Tierkörpers, die zum Beispiel im Falle eines Vierbeiners je zwei Vorder- und Hinterbeine bzw. Vorder- und Hinterläufe darstellen, ist der Tierkörper an die Radstangen des Fahrgestells und über diese wiederum mittelbar an die Laufräder gekoppelt. Eine gewünschte und vom Untergrund ausreichend beabstandete Sitzhöhe für das Kind kann über langgestreckte Extremitäten erreicht werden. Im Sinne der vorliegenden Erfindung kann unter dem Begriff Extremität jede Art von Fortsatz, Vorsprung, Anhang oder Ausstülpung verstanden werden, welche über einen Grundkörper des Torsos bzw. über eine äußere Oberfläche des Torsos hinausragt.

Die wenigstens zwei Torsoabschnitte können bezogen auf eine eine Körperlängsachse des Tierkörpers darstellende Hauptachse neben- oder hintereinander angeordnet sein. Je nach Anordnung definieren die Torsoabschnitte dementsprechend einen rechten und einen linken oder einen vorderen und einen hinteren Torsoabschnitt. Um ein möglichst naturgetreues und ansprechendes Design des Tierkörpers zu erreichen, sind die Torsoabschnitte vorzugsweise mit einem Überzug bzw. Bezug versehen und daher bei äußerer Betrachtung des Kinderwagens nicht sichtbar. Zusätzlich kann der Überzug mit einem weichen Material unterfüttert sein und/oder die Torsoabschnitte können mit einer Polsterung ausgestattet sein.

Besonders vorteilhaft kann beim Schieben des Sitz-/Liegewagens bedingt durch die Auf- und Abwärtsbewegung der Torsoabschnitte eine Bewegung wie bei der Fortbewegung eines Tieres nachgestellt bzw. nachgeahmt werden. Einem auf dem Sitz-/Liegewagen sitzenden Kind wird dabei ein Gefühl vermittelt, als ob es reitet. Der vorliegende Sitz-/Liegewagens stellt daher nicht nur ein Transportgerät für Kinder sondern gleichzeitig auch ein Spaß-, Spiel- und Sportgerät dar. Besondere Vorteile ergeben sich durch den vorliegenden Sitz-/Liegewagen dadurch, dass sowohl eine aufrechte Haltung des Kindes gefördert als auch eine Eigenbewegung des sitzendes Kindes, bei der das Kind auf die im Tierkörper erzeugten Bewegungen reagiert, angeregt wird. Der vorliegende Sitz-/Liegewagen kommt somit dem kindlichen Spieltrieb sowie dem kindlichen Bewegungsdrang entgegen. Gleichzeitig wird mit dem vorliegenden Sitz-/Liegewagen die Muskulatur des Kindes auf eine entsprechend kindgerechte Weise gestärkt, wodurch eine verbesserte, insbesondere eine wirbelsäulenschonende Haltung des Kindes gefördert werden kann.

Um eine Tierbewegung, insbesondere eine Bewegung von Vierbeinern auf eine möglichst naturgetreue Weise nachzustellen und damit das Gefühl des Reitens für das aufsitzende Kind zu verstärken, weist der Torso 6a gemäß der vorliegenden Erfindung wenigstens vier beweglich miteinander verbundene Torsoabschnitte auf. Bevorzugt sind die Torsoabschnitte dabei in Bezug auf die die Körperlängsachse des Tierkörpers darstellende Hauptachse paarweise hintereinander angeordnet und bilden daher zwei vordere und zwei hintere Torsoabschnitte. Bevorzugt ist jeder Torsoabschnitt über je eine Extremität an das Fahrgestell gekoppelt. Vorzugsweise kann dadurch eine Lauf- oder Gangart eines Tieres besonders gut nachempfunden werden. So kann beispielsweise wie bei einem Pferdegalopp ein vorderer, rechter Torsoabschnitt gleichzeitig mit einem linken, hinteren Torsoabschnitt aufwärts bewegt werden während der vordere, linke und der hintere, rechte Torsoabschnitt abwärts bewegt werden und vice versa.

Vorzugsweise sind die Torsoabschnitte über dafür vorgesehene elastische Elemente, insbesondere über Federelemente beweglich miteinander verbunden. Als elastische Elemente können jegliche Art von bandförmigen, stab- oder leistenförmigen, oder im Wesentlichen kugelförmigen oder ovalen Elementen aus einem elastischen Material Verwendung finden, solange durch diese Elemente eine bewegliche aber sichere Verbindung der Torsoabschnitte hergestellt ist. Besonders bevorzugt werden Federelemente mit einer vorgegebenen Feder- oder Spannkraft zur beweglichen Verbindung der Torsoabschnitte verwendet. Um insbesondere bei der Verwendung von Federelementen einer potentiellen Verletzungsgefahr vorzubeugen, sind die Federelemente bevorzugt mit einem Überzug versehen, beispielsweise mit einem Überzug aus Textil.

Ebenso ist es denkbar, dass die einzelnen Torsoabschnitte derart miteinander verbunden sind, dass die Zwischenräume bzw. Fugen der in vorgegebener Weise angeordneten Torsoabschnitte mit einem elastischen, aushärtbaren Kunststoffmaterial ausgespritzt werden und die bewegliche Verbindung mittels des ausgehärteten aber nach wie vor elastischen Kunststoffmaterials bewirkt wird.

Besondere Vorteile ergeben sich darüber, dass jedes Laufrad feststellbar mit der Radstange verbunden ist, wobei jedes Laufrad in einer vorgegebenen Leerlaufposition drehbeweglich an der Radstange gelagert ist und in einer vorgegebenen Feststellposition verdrehungsgesichert gegen die Radstange festgestellt ist und somit feststehend zur Radstange angeordnet ist. Die Leerlaufposition stellt somit eine Art Ruhestellung dar, in der die Radstange durch die Drehbewegung der Laufräder nicht in Rotation versetzt wird. Die Drehbewegung der Laufräder ist in dieser Leerlaufposition bzw. Ruhestellung entkoppelt von der Radstange und eine Auf- und Abwärtsbewegung der Torsoabschnitte erfolgt nicht. Eine Bewegung im Torso 6a kann daher in der Leerlaufposition ausgekoppelt, ausgeklinkt oder ausgeschaltet werden, so dass der vorliegende Kinderwagen in dieser Leerlaufposition bzw. Ruhestellung insbesondere vorteilhaft auch für den Transport eines ruhenden oder schlafenden Kindes dienen kann.

Gemäß einer bevorzugten Ausführungsform der vorliegenden Erfindung erstreckt sich jede Radstange entlang einer jeweiligen Drehachse und die zumindest eine Kopplungseinrichtung ist in Form eines ersten Kopplungsabschnittes ausgebildet, wobei der erste Kopplungsabschnitt eine im Wesentlichen parallel zur Drehachse verlaufende erste Kopplungsachse aufweist. Koaxial zur Drehachse verlaufende Achsabschnitte schließen an den Kopplungsabschnitt an. Zusätzlich weist jede Radstange besonders bevorzugt einen zweiten Kopplungsabschnitt auf, wobei der zweite Kopplungsabschnitt eine im Wesentlichen parallel zur Drehachse verlaufende zweite Kopplungsachse aufweist. Gemäß einer besonders bevorzugten Ausführungsform verlaufen die erste und die zweite Kopplungsachse ebenfalls parallel zueinander. Besonders bevorzugt sind dabei der erste und der zweite Kopplungsabschnitt in Bezug auf die Drehachse sich gegenüber liegend angeordnet und derart zu den Achsabschnitten ausgerichtet, dass die Drehachse und die erste und zweite Kopplungsachse in einer gemeinsamen Ebene aufgenommen sind.

Die Kopplungsabschnitte können vorliegend auch als im Wesentlichen U-förmige Ausbuchtungen oder Ausbiegungen der Radstange verstanden werden, welche sich in Bezug auf die Drehachse vorzugsweise gegenüberliegen. Alternativ können die Ausbuchtungen oder Ausbiegungen auch versetzt zueinander angeordnet sein und zwar derart, dass die Drehachse und die erste Kopplungsachse in einer ersten Ebene und die Drehachse und die zweite Kopplungsachse in einer zweiten Ebene aufgenommen werden, wobei sich die erste und die zweite Ebene entlang der Drehachse schneiden und einen vorgegebenen Winkel von beispielsweise rund 90° einschließen. Gemäß einer weiteren alternativen Ausführungsform können die Ausbuchtungen oder Ausbiegungen so angeordnet sein, dass die erste und die zweite Kopplungsachse in einer gemeinsamen Achse zusammenfallen.

Zur Kopplung der Extremitäten an die Radstangen sind gemäß einer bevorzugten Ausführungsform der vorliegenden Erfindung manschettenartige Hülsenelemente vorgesehen, wobei die manschettenartigen Hülsenelemente mit einem freien Ende der Extremitäten fest verbunden sind und wobei in jedem manschettenartigen Hülsenelement vorzugsweise je ein Kopplungsabschnitt der Radstange drehbar aufgenommen ist. Die Radstange, insbesondere die Kopplungsabschnitte der Radstange sind drehbar oder auch gleitend in den manschettenartigen Hülsenelementen gelagert, derart dass eine Rotation der Radstange um die Drehsachse leichtgängig und ungehindert erfolgen kann.

Durch die oberhalb beschriebene, bevorzugte Ausbildung und Anordnung der Kopplungsabschnitte in Kombination mit den manschettenartigen Hülsenelementen zur Kopplung des Tierkörpers an die Radstangen kann mit dem vorliegenden Kinderwagen insbesondere eine Fortbewegung nach Art des Reitens nachgeahmt werden. Beim Vorwärtsschieben des Kinderwagens werden die Laufräder bewegt und in die Drehbewegung versetzt. Die Drehbewegung der Laufräder wiederum bewirkt die Rotation der Radstangen. Mittels der drehbeweglich in den manschettenartigen Hülsenelementen gelagerten Kopplungsabschnitte wird die Rotationsbewegung der Radstangen schließlich auf die gekoppelten Extremitäten übertragen und gleichzeitig in eine Auf- und Abwärtsbewegung umgewandelt, welche über die Extremitäten in die Torsoabschnitte eingeleitet wird.

Die Torsoabschnitte werden dadurch in gegenläufigen Bewegungen, insbesondere Auf- und Abwärtsbewegungen relativ zueinander bewegt, wodurch die Bewegung eines Tiertorsos 6a insbesondere eines Tierrückens bei dessen Fortbewegung imitiert wird. Es versteht sich von selbst, dass die gegenläufigen Auf- und Abwärtsbewegungen im Sinne der vorliegenden Erfindung Teilbewegungen eines komplexeren Bewegungsmusters darstellen, wobei die Torsoabschnitte durch die Rotation der Radstangen nicht ausschließlich vertikal bewegt werden. Die Rotation der Radstange vermittelt eine Drehung der Kopplungsabschnitte um die Drehachse, welche wiederum neben den Vertikalbewegungen auch einen Bewegungsanteil in horizontaler Ausrichtung in die Torsoabschnitte einleiten kann.

Besonders bevorzugt sind im Bereich der Extremitäten Dämpfungselemente, vorzugsweise Gelenkelemente vorgesehen, die zur Abfederung oder Dämpfung der Bewegungen der Torsoabschnitte dienen. Vorzugsweise sind die Dämpfungsinsbesondere Gelenkelemente in den Extremitäten ähnlich den Gelenken eines natürlichen Tierskeletts angeordnet, beispielsweise analog zu Sprung-, Fessel-, Karpal- oder Kniegelenken eines Tieres. Durch die Dämpfungselemente können insbesondere ruckartige, heftige Bewegungen im Torso 6a des Tierkörpers vermieden werden. Ebenso erweist es sich als besonders förderlich für das Entstehen einer möglichst naturgetreuen, gefederten Bewegung bzw. für eine rundes, weiches Bewegungsmuster, wenn die Extremitäten an den Torsoabschnitten angelenkt sind. Dies ist insbesondere mit einer beweglichen oder elastischen oder gelenkigen Befestigungseinrichtung möglich.

Ganz besonders bevorzugt handelt es sich bei dem Tierkörper um einen Pferdekörper, wobei mit der aufgrund der Fahrbewegung des Kinderwagens erzeugten, gegeneinander gerichteten Bewegung der Torsoabschnitte eine Pferdegangart nachstellbar ist. Beispielsweise kann durch vorgegebene Anordnung der Kopplungsabschnitte der Radstangen eine Schritt- oder Trab- oder Galoppbewegung eines Pferdes nachgeahmt werden.

Gemäß einer alternativen bevorzugten Ausführungsform der vorliegenden Erfindung ist jede Radstange zweiteilig ausgebildet, wobei ein erstes und ein zweites Radstangenteil über ein dafür vorgesehenes Umsteckelement zusammengesteckt sind um die Radstange auszubilden. Beispielsweise ist es durch diese zweiteilige Ausbildung der Radstange möglich, die Anordnung der Kopplungsabschnitte einer Radstange zueinander zu ändern und darüber von einer Gangart in eine andere zu wechseln.

Um ein auf dem Kinderwagen sitzendes Kind vor Witterungseinflüssen, wie zum Beispiel Sonne, Regen oder Wind schützen zu können, ist an dem Kinderwagen vorzugsweise zusätzlich ein Verdeck vorgesehen, wobei das Verdeck an der Sitzvorrichtung oder an dem Fahrgestell befestigt ist und wobei das Verdeck vorzugsweise klappbar und/oder faltbar ausgebildet ist.

Aus Sicherheits- und Komfortgründen ist im Bereich der Sitzvorrichtung bevorzugt zusätzlich eine Rückenlehne vorgesehen, wobei die Rückenlehne vorzugsweise verstellbar ausgebildet ist. Beispielsweise kann die Rückenlehne so ausgebildet sein, dass sie von einer Sitzposition über vorzugsweise mehrere Stufen in eine Liegeposition verstellt werden kann. Insbesondere in Ausführungsformen, in denen über eine Leerlaufposition der Laufräder die Bewegung der Torsoabschnitte entkoppelt bzw. ausgeschaltet werden kann, ist eine in Liegeposition einstellbare Rückenlehne von besonderem Vorteil, da eine Liegefläche für das ruhende Kind geschaffen werden kann.

Beispielsweise kann die Rückenlehne ferner mit einem Sitzabschnitt versehen sein, der besonders bevorzugt in Form eines Sattels ausgebildet sein kann. Zusätzliche Sicherheit für das Kind bieten seitliche Stützlehnen, die im Bereich der Sitzvorrichtung ebenfalls vorhanden sein können. In alternativen Ausführungsformen können auch entsprechende Sitzhilfen vorgesehen sein, die im Bereich des Torsos angeordnet sind.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig.1a: grob schematisch dargestellt eine perspektivische Ansicht von vier beweglich miteinander verbundenen Sitz-/Liegeunterlagenelementen;
- Fig. 1b: eine schematische Draufsicht auf vier beweglich miteinander verbundene Sitz/Liegeunterlagenelemente;
- Fig. 2: eine seitliche Ansicht auf einen Hochstuhl mit einer Sitz-/Liegeunterlage gemäß einer Ausführungsform der vorliegenden Erfindung;
- Fig. 3: in einer vereinfachten schematischen Darstellung eine Ansicht eines Kinderwagens;
- Fig. 4: eine seitliche Ansicht auf eine in Form eines Tierkörpers ausgebildete Sitzvorrichtung gemäß einer Ausführungsform der vorliegenden Erfindung;
- Fig. 5a: einen schematischen Ausschnitt der Torsoabschnitte und des Fahrgestells einer bevorzugten Ausführungsform;
- Fig. 5b: einen schematischen Ausschnitt der Torsoabschnitte und des Fahrgestells einer weiteren bevorzugten Ausführungsform und
- Fig. 6: eine perspektivische Frontansicht einer Ausführungsform des Fahrgestells.

### Wege zur Ausführung der Erfindung

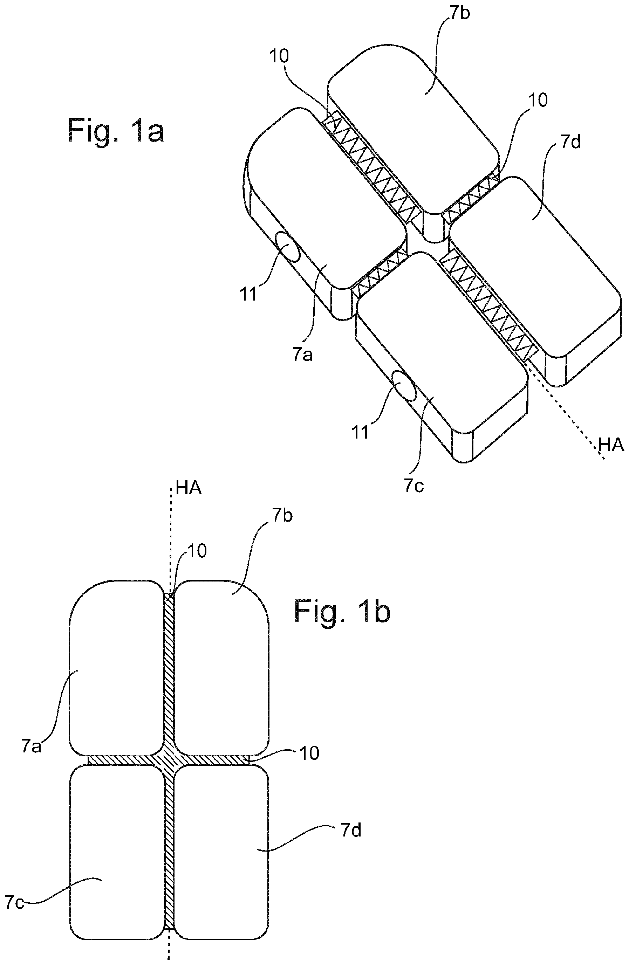

In den Figuren 1a und 1b sind die mittels elastischer Elemente 10 beweglich miteinander verbundenen Sitz-/Liegeunterlagenelemente 7a, 7b, 7c, 7d isoliert dargestellt, wobei die Sitz-/Liegeunterlagenelemente 7a, 7b, 7c, 7d in Figur 1a in einer perspektivischen Ansicht und in Figur 1b in einer Draufsicht gezeigt sind. In dem Beispiel der Figur 1b sind die vier Sitz-/Liegeunterlagenelemente 7a, 7b, 7c, 7d mittels eines im Wesentlichen kreuzförmig ausgebildeten elastischen Elementes 10 miteinander verbunden, wohingegen in Figur 1a vier Federelemente 10 zur jeweiligen Verbindung benachbart angeordneter Sitz-/Liegeunterlagenelemente 7a, 7b, 7c, 7d vorgesehen sind.

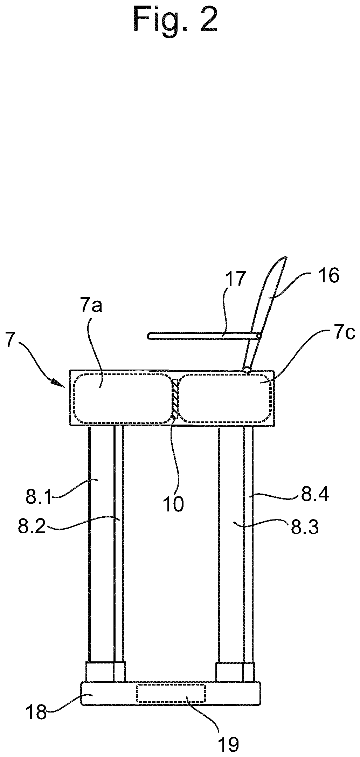

Die einzelnen Sitz-/Liegeunterlagenelemente 7a, 7b, 7c, 7d sind im Wesentlichen quaderförmig ausgebildet, wobei entsprechende Rundungen und/oder Abschrägungen an den Seiten bzw. Kanten vorgesehen sind, um eine für den Nutzer angenehme Grundform zu gewährleisten. Bezogen auf die Hauptachse HA sind ein vorderes Paar von Sitz-/Liegeunterlagenelementen 7a, 7b und ein hinteres Paar von Sitz-/Liegeunterlagenelementen 7c, 7d hintereinander angeordnet, wobei das vordere Paar von Sitz-/Liegeunterlagenelementen 7a, 7b zur Verbindung mit einem vorderen Paar von Lagerelementen 8.1, 8.2 (siehe Figur 2) und das hintere Paar von Sitz-/Liegeunterlagenelementen 7c, 7d zur Verbindung mit einem hinteren Paar von Lagerelementen 8.3, 8.4 (siehe Figur 2) vorgesehen ist. Jedes der Sitz-/Liegeunterlagenelemente 7a, 7b, 7c, 7d verfügt dazu über eine Befestigungseinrichtung 11 für eine Lagerelement. Die Befestigungseinrichtungen 11 sind im dargestellten Beispiel der Figur 1a jeweils seitlich an den Sitz-/Liegeunterlagenelementen 7a, 7b, 7c, 7d angeordnet.

Fig. 2 zeigt in einer vereinfachten schematischen Darstellung eine seitliche Ansicht auf einen Hochstuhl mit einer Sitz-/Liegeunterlage gemäß einer Ausführungsform der vorliegenden Erfindung. Die aus vier Sitz-/Liegeunterlagenelementen 7a, 7b, 7c, 7d aufgebaute Sitz-/Liegeunterlage ist mit einer Rückenlehne 16 verbunden, wobei jedes der beweglich miteinander verbundenen Sitz-/Liegeunterlagenelemente 7a, 7b, 7c, 7d mit einem Standbein 8.1, 8.2, 8.3, 8.4 zum Aufstellen auf einer Unterlage verbunden ist. An der Rückenlehne 16 sind außerdem seitliche Stützlehnen 17 angebracht. In dieser Ausführungsform kommt die Sitz-/Liegeunterlage als Sitzfläche eines Stuhls zum Einsatz. Bevorzugt kann dabei zumindest ein Standbein 8.1, 8.2, 8.3, 8.4 mit einem Federelement (nicht gezeigt) ausgestattet sein. Die Standbeine 8.1, 8.2, 8.3, 8.4 sind derart mit einem in einem Sockelelement 18 angeordneten Antriebselement 19 verbunden, dass die Standbeine 8.1, 8.2, 8.3, 8.4 durch das Antriebselement 19 unabhängig voneinander in eine Auf- und Abwärtsbewegung versetzt werden können. Bei der Auf- und Abwärtsbewegung handelt es sich bevorzugt um ein komplexeres Bewegungsmuster mit beliebig kombinierbaren vertikalen und horizontalen Richtungskomponenten, so dass die Auf- und Abwärtsbewegungen vorliegend als dreidimensionales Bewegungsmuster verstanden werden. Das dreidimensionale Bewegungsmuster weist beispielsweise auf-, ab, vor- und rückwärts gerichtete Richtungskomponenten auf und kann besonders bevorzugt auch laterale Bewegungskomponenten oder Kippbewegungen umfassen. Die mittels des Antriebselementes 19 erzeugten Auf- und Abwärtsbewegungen der Standbeine 8.1, 8.2, 8.3, 8.4 werden unmittelbar auf die Sitz-/Liegeunterlagenelemente 7a, 7b, 7c, 7d übertragen bzw. in diese eingeleitet, so dass die Bewegung der Sitz-/Liegeunterlage antreibbar, vorzugsweise steuerbar ist. Mit dieser Ausführungsform wird ein Stuhl zur Verfügung gestellt, der vorteilhafterweise in physiotherapeutischen Behandlungen einsetzbar ist.

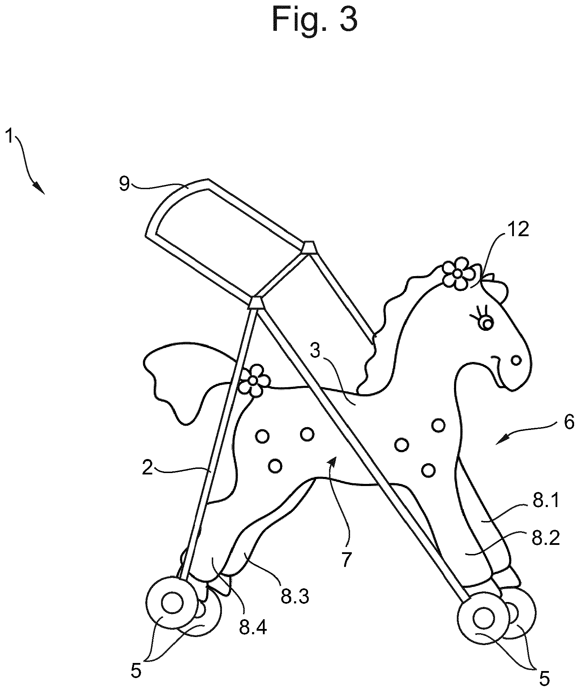

Fig. 3 zeigt in einer vereinfachten schematischen Darstellung eine Ansicht eines Kinderwagens 1. Der Kinderwagen 1 weist ein Fahrgestell 2 und eine an das Fahrgestell 2 gekoppelte Sitzvorrichtung 3 auf. Die Sitzvorrichtung 3 ist in Form eines Tierkörpers 6 ausgebildet, wobei es sich im dargestellten Beispiel um einen Pferdekörper handelt.

Der Pferdekörper 6 umfasst einen Torso 6a, einen Kopf 12 und vier Extremitäten 8.1, 8.2, 8.3, 8.4, die die Vorder- und Hinterbeine des Pferdekörpers 6 darstellen. Der auch als Rumpf zu bezeichnende Torso 6a bildet einen Aufsitzbereich für ein Kind, derart dass das Kind rittlings auf dem Pferdekörper 6 sitzen kann. Der Kopf 12 kann beispielsweise eine Absicherungs- oder Stützfunktion übernehmen, da sich das Kind bequem daran festhalten kann. Optional können beispielsweise zusätzlich gesonderte Haltegriffe oder Haltebänder am Kopf 12 vorgesehen sein.

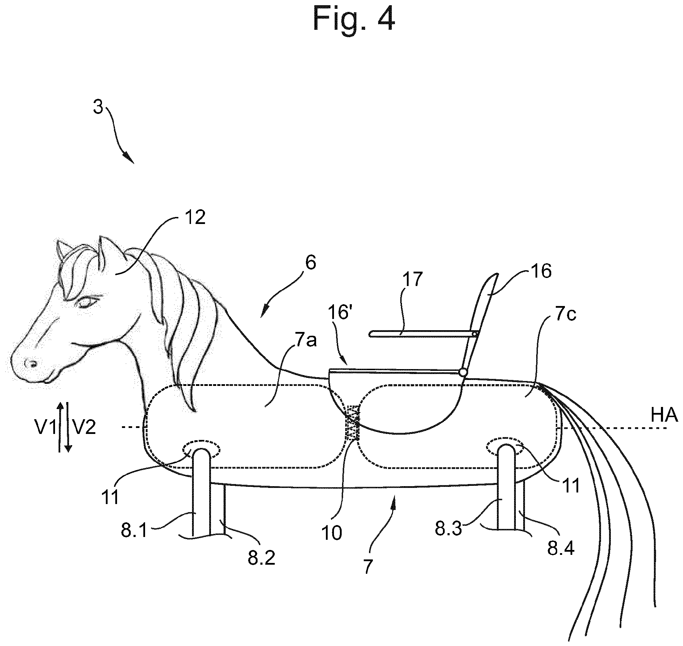

Das Fahrgestell 2 umfasst zumindest zwei Radstangen 4 (in der Figur 1 nicht ersichtlich, siehe Figuren 4a, 4b) und mit den Radstangen 4 verbundene Laufräder 5. Ferner weist das Fahrgestell 2 ein Schiebegriffstück 9 auf, das im dargestellten Beispiel verstellbar ausgebildet ist, so dass es zum Zwecke einer angenehmen Arm- bzw. Handhaltung für eine den Kinderwagen 1 schiebende Person individuell eingestellt werden kann. Obwohl aus Gründen der Übersichtlichkeit in der Figur 3 nicht dargestellt, kann an dem Kinderwagen 1 ferner ein Verdeck als Licht-, Wind- und/oder Regenschutz vorgesehen sein, wobei das Verdeck vorzugsweise verstellbar, insbesondere klappbar und/oder faltbar ausgebildet ist. Ebenso bevorzugt kann im Bereich des Torsos eine Sitzhilfe angeordnet sein, die beispielsweise in Form eines Sattels ausgebildet ist.

Die Figur 4 zeigt ausschnittsweise in seitlicher Ansicht eine in Form eines Pferdekörpers 6 ausgebildete Sitzvorrichtung 3 gemäß einer bevorzugten Ausführungsform der vorliegenden Erfindung. Um ein möglichst naturgetreues sowie insbesondere ein für Kinder ansprechendes äußeres Erscheinungsbild des Pferdekörpers 6 zu erreichen, ist der entsprechend ausgeformte Pferdekörper 6 mit einem fellartigen, textilen Bezug oder Überzug versehen. Insbesondere in demjenigen Bereich des Torsos, der den Aufsitzbereich für das Kind bildet, ist der fellartige, textile Bezug oder Überzug, zusätzlich mit einem weichen, vorzugsweise zumindest teilweise elastischen Material, beispielsweise mit einem schaumstoffartigen Material unterfüttert. Dadurch werden insbesondere eine weiche und bequeme Sitzfläche, sowie weiche, seitliche Anlage- bzw. Auflageflächen für die Beine des Kindes bereitgestellt.

Erfindungsgemäß umfasst der Torso 6a zumindest vier beweglich miteinander verbundene Torsoabschnitte 7a, 7b, 7c, 7d, die durch den fellartigen, textilen Bezug oder Überzug von außen nicht sichtbar sind, und daher in der Figur 4 strichliert dargestellt sind. In dem Beispiel der Figur 4 umfasst der Torso 6a vier Torsoabschnitte 7a, 7b, 7c, 7d, welche bezogen auf eine die Körperlängsachse bildende Hauptachse HA des Pferdekörpers 6 in Zweierpaaren hintereinander angeordnet sind. Dabei stellt der in der Figur 4 angedeutete Torsoabschnitt 7a einen vorderen, linken und der angedeutete Torsoabschnitt 7c einen hinteren, linken Torsoabschnitt dar. Analog dazu weist der Torso 6a des dargestellten Beispiels einen rechten, vorderen sowie einen rechten, hinteren Torsoabschnitt auf, die in der seitlichen Ansicht der Figur 4 jedoch nicht ersichtlich sind.

Die Torsoabschnitte 7a, 7b, 7c, 7d sind aus einem im Wesentlichen festen Material hergestellt, im vorliegenden Beispiel sind sie aus einem Hartgummi gefertigt. Über elastische Elemente 10, welche im vorliegenden Beispiel in Form von Federelementen ausgebildet sind, sind die Torsoabschnitte 7a, 7b, 7c, 7d beweglich miteinander verbunden. Die Federelemente 10 sind über geeignete Befestigungsmittel an den jeweiligen miteinander zu verbindenden Torsoabschnitten 7a, 7b, 7c, 7d befestigt und sind dazu ausgelegt und eingerichtet, gegeneinander gerichtete Auf- und Abwärtsbewegungen V1, V2 der Torsoabschnitte 7a, 7b, 7c, 7d zuzulassen. Die Auf- und Abwärtsbewegungen V1, V2 der Torsoabschnitte 7a, 7b, 7c, 7d können vorliegend auch als gegenläufige oder entgegengesetzte Bewegungen verstanden werden, welche insbesondere vertikale und horizontale Richtungskomponenten aufweisen, so dass die Auf- und Abwärtsbewegungen vorliegend als dreidimensionales Bewegungsmuster verstanden werden können.

Der Pferdekörper 6 weist vier Extremitäten 8.1, 8.2, 8.3, 8.4, auf, wobei die Extremitäten 8.1 und 8.3 das linke Vorderbein bzw. das linke Hinterbein des Pferdekörpers 6 darstellen. Die Extremitäten 8.1, 8.2, 8.3, 8.4 sind mittels dafür vorgesehener und eingerichteter Befestigungseinrichtungen 11 mit den Torsoabschnitten 7a, 7b, 7c, 7d verbunden, wobei das linke Vorderbein 8.1 mit dem vorderen, linken Torsoabschnitt 7a und das linke Hinterbein 8.3 mit dem hinteren, linken Torsoabschnitt 7c verbunden ist. Im dargestellten Beispiel sind die Extremitäten 8.1, 8.2, 8.3, 8.4 über gelenkige Befestigungseinrichtungen 11 an den Torsoabschnitten 7a, 7b, 7c, 7d angelenkt.

Für einen verbesserten Sitzkomfort aber auch aus Gründen der Sicherheit umfasst die Sitzvorrichtung 3 des dargestellten Beispiels ferner eine verstellbare Rückenlehne 16 sowie seitliche Stützlehnen 17, durch die das Kind zusätzlich gestützt und gesichert werden kann. Die Rückenlehne 16 kann wie vorliegend gezeigt, in Verbindung mit einem Sitzabschnitt 16' ausgebildet sein, wobei der Sitzabschnitt 16' beispielsweise die Form eines Sattels aufweist.

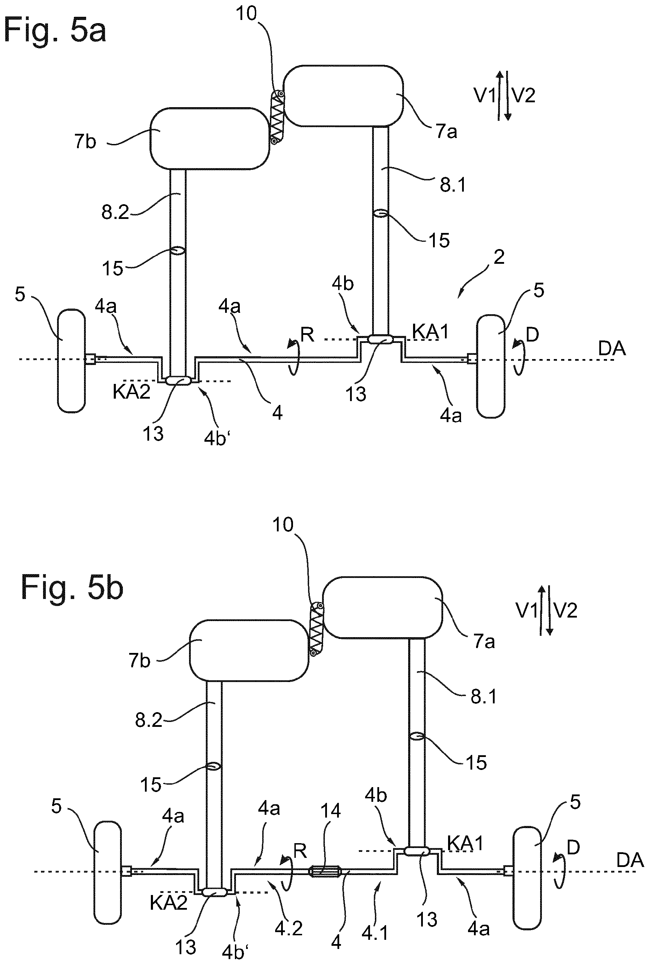

Die Figur 5a zeigt einen schematischen Ausschnitt der vorderen Torsoabschnitte 7a, 7b mit verbundenen vorderen Extremitäten 8.1, 8.2 und des Fahrgestells 2 gemäß einer bevorzugten Ausführungsform der Erfindung. Die vorderen Extremitäten 8.1, 8.2 sind an einem eine Unterseite der Torsoabschnitte 7a, 7b bildenden Bereich mit den Torsoabschnitten 7a, 7b verbunden. Erfindungsgemäß ist jede Radstange 4 um eine Drehachse DA der Laufräder 5 drehbar und weist eine Kopplungseinrichtung auf, die außerhalb der Drehachse DA angeordnet ist, so dass aufgrund einer entsprechenden Kopplung des Pferdekörpers 6 an die Kopplungseinrichtung eine durch Drehbewegung D der Laufräder 5 erzeugte Rotation R der Radstange 4 in gegenläufige Auf- und Abwärtsbewegungen V1, V2 der Torsoabschnitte 7a, 7b umgewandelt werden kann.

Dazu weist die sich entlang der Drehachse DA der Laufräder 5 erstreckende Radstange 4 des Fahrgestells 2 einen ersten und einen zweiten Kopplungsabschnitt 4b, 4b' für die Kopplung der Extremitäten 8.1, 8.2 sowie an die Kopplungsabschnitte 4b, 4b' anschließende Achsabschnitte 4a auf. Die Achsabschnitte 4a verlaufen koaxial zur Drehachse DA und der erste und zweite Kopplungsabschnitt 4b, 4b' weisen eine im Wesentlichen parallel zur Drehachse DA verlaufende erste und zweite Kopplungsachse KA1, KA2 auf, wobei die erste und zweite Kopplungsachse KA1, KA2 ebenfalls parallel zueinander orientiert sind. Der erste und der zweite Kopplungsabschnitt 4b, 4b' sind in Bezug auf die Drehachse DA sich gegenüber liegend angeordnet und derart zu den Achsabschnitten 4a ausgerichtet, dass die Drehachse DA und die erste und zweite Kopplungsachse KA1, KA2 in einer gemeinsamen Ebene aufgenommen sind. Der erste und zweite Kopplungsabschnitt 4b, 4b' können vorliegend auch als im Wesentlichen U-förmige Ausbuchtungen oder Ausbiegungen oder als U-förmige Kopplungsprofile verstanden werden, welche sich in Bezug auf die Drehachse DA gegenüberliegen.

Für die effektive Kopplung der Extremitäten 8.1, 8.2 an die Radstange 4 sind manschettenartige Hülsenelemente 13 vorgesehen, wobei in jedem manschettenartigen Hülsenelement 13 ein Kopplungsabschnitt 4b, 4b' drehbar bzw. drehbeweglich gelagert ist. Durch die oberhalb beschriebene, bevorzugte Ausbildung und Anordnung der Kopplungsabschnitte 4b, 4b' wird aufgrund der Kopplung der Extremitäten 8.1, 8.2 über die manschettenartigen Hülsenelement 13 erreicht, dass bei Rotation R der Radstange 4 um die Drehachse DA die Torsoabschnitte 7a, 7b gegenläufig zueinander aufwärts und abwärts bewegt werden.

Die Ausführungsform der Figur 5b unterscheidet sich von derjenigen der Figur 5a dadurch, dass die Radstange 4 zweiteilig ausgebildet ist und ein erstes und ein zweites Radstangenteil 4.1, 4.2 umfasst. Das erste und das zweite Radstangenteil 4.1, 4.2 sind über ein dafür vorgesehenes Umsteckelement 14 zusammengesteckt und verbunden um die Radstange 4 auszubilden. Der erste Kopplungsabschnitt 4b ist dabei in dem ersten Radstangenteil 4.1 ausgebildet und das zweite Radstangenteil 4.2 weist den zweiten Kopplungsabschnitt 4b' auf. Über das Umsteckelement 14 können die beiden Radstangenteile 4.1, 4.2 in unterschiedlicher Orientierung zueinander bzw. in verschiedenen Einstellungen miteinander verbunden werden. Beispielsweise ist es möglich, die beiden Radstangenteile 4.1, 4.2 so zu verbinden, dass die Drehachse DA und die erste Kopplungsachse KA1 in einer ersten Ebene aufgenommen werden und die Drehachse DA und die zweite Kopplungsachse KA2 in einer zweiten Ebene aufgenommen werden, wobei sich die erste und die zweite Ebene im Bereich der Drehachse DA schneiden. Alternativ kann die Verbindung der beiden Radstangenteile 4.1, 4.2 derart erfolgen, dass die erste und die zweite Kopplungsachse KA1, KA2 in einer gemeinsamen Achse zusammenfallen.

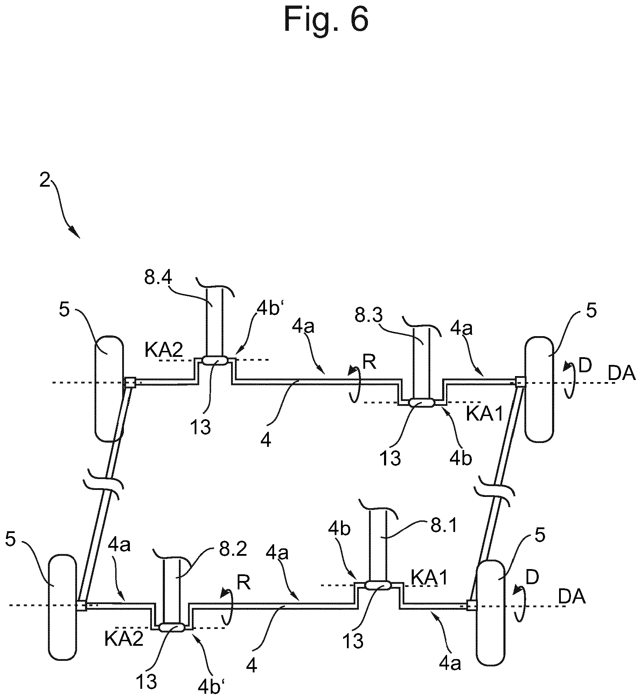

Durch entsprechende Anordnung der zwei vorgesehenen Radstangen 4, nämlich der vorderen und der hinteren Radstange 4, insbesondere im Hinblick auf eine jeweilige Ausrichtung und Orientierung der Kopplungsabschnitte 4b, 4b' kann beim Schieben des Kinderwagens 1 beispielsweise eine bestimmte Pferdegangart nachgeahmt werden. Anhand der Figur 6, die eine grob schematische perspektivische Frontansicht des Fahrgestells 2 wiedergibt, soll beispielhaft eine Anordnung der vorderen und hinteren Radstangen 4 veranschaulicht werden, mit der eine Galopp-Bewegung imitiert werden kann.

Beim Vorwärtsschieben des Kinderwagens 1 werden aufgrund der Drehbewegung D der Laufräder 5 und vermittelt durch die Rotation R der Radstangen 4 um die jeweilige Drehachse DA gleichzeitig die vordere, rechte Extremität 8.2 und die hintere, linke Extremität 8.3. nach unten sowie die vordere, linke Extremität 8.1 und die hintere, rechte Extremität 8.4 aufwärts bewegt, genauso wie bei einem galoppierenden Pferd. Mittels zweiteilig ausgebildeter Radstangen 4 gemäß der in Figur 4b dargestellten bevorzugten Ausführungsform kann je nach Belieben von einer Gangart in eine andere Gangart gewechselt und beispielsweise auch eine Schritt- oder Trabbewegung nachgeahmt werden.

### Bezugszeichenliste

- 1: Kinderwagen
- 2: Fahrgestell
- 3: Sitz-/Liegevorrichtung
- 4: Radstangen
- 4.1: erstes Radstangenteil
- 4.2: zweites Radstangenteil
- 4a: Achsabschnitte
- 4b: erster Kopplungsabschnitt
- 4b': zweiter Kopplungsabschnitt
- 5: Laufräder
- 6: Tierkörper
- 6a: Torso
- 7: Sitz-/Liegeunterlage
- 7a - 7d: Sitz-/Liegeunterlagenelemente
- 8.1 - 8.4: Lagerelement
- 9: Schiebegriffstück
- 10: elastische Elemente
- 11: Befestigungseinrichtung für Lagerelemente
- 12: Kopf
- 13: manschettenartiges Hülsenelement
- 14: Umsteckelement
- 15: Dämpfungselement
- 16: Rückenlehne
- 16': Sitzabschnitt
- 17: seitliche Stützlehne
- 18: Sockelelement
- 19: Antriebselement
- D: Drehbewegung der Laufräder
- DA: Drehachse
- HA: Hauptachse
- KA1: erste Kopplungsachse
- KA2: zweite Kopplungsachse
- R: Rotation der Radstangen
- V1: Aufwärtsbewegung
- V2: Abwärtsbewegung

## Patentansprüche

1. Sitz-/ Liegeunterlage (7) umfassend zumindest vier beweglich miteinander verbundene Sitz-/ Liegeunterlagenelemente (7a, 7b, 7c, 7d) und zumindest ein Lagerelement (8.1, 8.2, 8.3, 8.4), wobei das Lagerelement (8.1, 8.2, 8.3, 8.4) derart mit den Sitz-/Liegeunterlagenelementen (7a, 7b, 7c, 7d) verbunden ist, dass eine Bewegung der Sitz-/ Liegeunterlagenelemente (7a, 7b, 7c, 7d) relativ zueinander erzeugbar ist, wobei die Verbindung der Lagerelemente mit den Sitz-/Liegeunterlagenelementen dafür vorgesehen und eingerichtet ist, die Sitz-/Liegeunterlagenelemente relativ zueinander zu bewegen, sodass eine aufsitzende oder aufliegende Person angeregt wird, durch Aktivierung der körpereigenen Muskulatur die Bewegungen der Sitz-/Liegeunterlage auszugleichen,
**dadurch gekennzeichnet, dass**
jedes der beweglich miteinander verbundenen Sitz-/Liegeunterlagenelemente (7a, 7b, 7c, 7d) über jeweils zumindest ein elastisches Verbindungselement, insbesondere Kautschukelement, mit einem kugelförmigen Unterteil verbunden ist, wobei das kugelförmige Unterteil beweglich in einer hohlkugelförmigen Schale gelagert ist und die hohlkugelförmige Schale mit zumindest einem Standelement zum Aufstellen auf einer Unterlage verbunden ist.

2. Sitz-/Liegeunterlage nach Anspruch 1, wobei ein Lagerelement (8.1, 8.2, 8.3, 8.4) als Auflager für die Sitz-/Liegeunterlagenelemente (7) dient.

3. Sitz-Liegeunterlage nach Anspruch 1 oder 2, wobei es sich bei der Bewegung der Sitz-/Liegeunteralgenelemente um Auf- und Abwärtsbewegung handelt, welche auch horizontale Bewegungskomponenten umfassen.

4. Sitz-/Liegeunterlage (7) nach einem der vorhergehenden Ansprüche, wobei die Sitz-/Liegeunterlagenelemente (7a, 7b, 7c, 7d) über dafür vorgesehene elastische Elemente (10), insbesondere über Federelemente, beweglich miteinander verbunden sind.

5. Sitz-/Liegeunterlage (7) nach einem der vorhergehenden Ansprüche, wobei es sich bei den Lagerelementen (8.1, 8.2, 8.3, 8.4) um Gestellstreben eines Sitz-/Liegewagens, insbesondere eines Kinderwagens, um Standbeine oder um elastische Verbindungselemente handelt.

6. Sitz-/Liegeunterlage (7) nach Anspruch 1, wobei das zumindest eine Standelement mit einem Federelement ausgestattet ist.

7. Sitz-/Liegeunterlage (7) nach Anspruch 1 oder 8, wobei die Sitz-/Liegeunterlage (7) mit einer Rückenlehne (16) verbunden ist, wobei jedes der beweglich miteinander verbundenen Sitz-/Liegeunterlagenelemente (7a, 7b, 7c, 7d) mit zumindest einem Standbein zum Aufstellen auf einer Unterlage verbunden ist.

8. Sitz-/Liegeunterlage (7) nach einem der Ansprüche 6 oder 7, wobei die Standbeine derart mit zumindest einem Antriebselement (19) verbunden sind, dass die Standbeine durch das Antriebselement (19) unabhängig voneinander in eine Auf- und Abwärtsbewegung versetzbar sind.

9. Sitz-/Liegewagen (1) mit einer Sitz-/Liegeunterlage (7) gemäß einem der Ansprüche 1 bis 5.

10. Sitz-/Liegewagen (1) nach Anspruch 9, wobei der Sitz-/Liegewagen (1) zumindest ein Fahrgestell (2) und zumindest eine an das Fahrgestell (2) gekoppelte und mit der Sitz-/Liegeunterlage (7) ausgestattete Sitz-/Liegevorrichtung (3) aufweist, wobei das Fahrgestell (2) wenigstens zwei Radstangen (4) und mit den Radstangen (4) verbundene Laufräder (5) aufweist, und wobei jedes der beweglich miteinander verbundenen Sitz-/Liegeunterlagenelemente (7a, 7b, 7c, 7d) über zumindest eine Gestellstrebe an das Fahrgestell (2) gekoppelt ist.

11. Sitz-/Liegewagen (1) nach Anspruch 9 oder 10, wobei jede Radstange (4) um eine Drehachse (DA) der verbundenen Laufräder (5) drehbar ist und mit zumindest einer außerhalb der Drehachse (DA) angeordneten Kopplungseinrichtung für die Kopplung der Gestellstreben ausgestattet ist, wobei durch eine Drehbewegung (D) der Laufräder (5) eine Rotation (R) der Radstangen (4) erzeugbar ist und wobei mittels der Kopplung der Gestellstreben an die Kopplungseinrichtungen der Radstangen (4) die erzeugte Rotation (R) der Radstangen (4) in gegenläufige, Auf- und Abwärtsbewegungen (VI, V2) der wenigstens zwei beweglich miteinander verbundenen Sitz-/Liegeunterlagenelemente (7a, 7b, 7c, 7d) umgewandelt wird.

12. Sitz-/Liegewagen nach einem der Ansprüche 9 bis 11, wobei die Sitz-/Liegevorrichtung (3) in Form eines Tierkörpers (6) mit einem einen Aufsitzbereich bildenden Torso 6a (6a) ausgebildet ist, wobei die beweglich miteinander verbundenen Sitz-/Liegeunterlagenelemente (7a, 7b, 7c, 7d) als beweglich miteinander verbundene Torsoabschnitte ausgebildet sind, wobei es sich bei dem Tierkörper (6) insbesondere um einen Pferdekörper handelt, wobei mit der aufgrund der Fahrbewegung des Sitz-/Liegewagens (1) erzeugten, gegeneinander gerichteten Bewegung der Torsoabschnitte eine Pferdegangart nachstellbar ist.

13. Stuhl, insbesondere zum Einsatz in physiotherapeutischen Behandlungen, umfassend eine Sitz-/Liegeunterlage nach einem der Ansprüche 1 bis 8.

## Claims

1. Seat/lying surface (7) comprising at least four movably interconnected seat/lying surface elements (7a, 7b, 7c, 7d) and at least one bearing element (8.1, 8.2, 8.3, 8.4), wherein the bearing element (8.1, 8.2, 8.3, 8.4) is connected to the seat/lying surface elements (7a, 7b, 7c, 7d) in such a way that a movement of the seat/lying surface elements (7a, 7b, 7c, 7d) relative to one another can be produced, wherein the connection of the bearing elements to the seat/lying surface elements being provided and suitable for this purpose, to move the seat/lying surface elements relative to one another, so that a person sitting or lying down is stimulated to compensate for the movements of the seat/lying surface by activating the body's own musculature,
**characterized in that**
each of the movably interconnected seat/lying surface elements (7a, 7b, 7c, 7d) is connected to a spherical lower part via in each case at least one elastic connecting element, in particular rubber element, wherein the spherical lower part being mounted movably in a hollow spherical shell and the hollow spherical shell being connected to at least one standing element for standing on a surface.

2. Seat/lying surface according to claim 1, wherein a bearing element (8.1, 8.2, 8.3, 8.4) serves as a support for the seat/lying surface elements (7).

3. The seat/lying surface according to claim 1 or 2, wherein the movement of the seat/lying surface elements is up and down movement which also includes horizontal movement components.

4. Seat/lying surface (7) according to one of the preceding claims, wherein the seat/lying surface elements (7a, 7b, 7c, 7d) are movably connected to one another via elastic elements (10) provided for this purpose, in particular via spring elements.

5. Seat/lying surface (7) according to one of the preceding claims, wherein the bearing elements (8.1, 8.2, 8.3, 8.4) are frame struts of a seat/lying surface, in particular a baby carriage, standing legs or elastic connecting elements.

6. Seat/lying surface (7) according to claim 1, wherein the at least one standing element is equipped with a spring element.

7. Seat/lying surface (7) according to claim 1, wherein the seat/lying surface (7) is connected to a backrest (16), wherein each of the movably interconnected seat/lying surface elements (7a, 7b, 7c, 7d) is connected to at least one standing leg for standing on a base.

8. Seat/lying surface (7) according to one of claims 6 or 7, wherein the standing legs are connected to at least one drive element (19) in such a way that the standing legs can be set in an upward and downward movement independently of one another by the drive element (19).

9. Seat/lying carriage (1) with a seat/lying surface (7) according to any of claims 1 to 5.

10. Seat/lying carriage (1) according to claim 9, wherein the seat/lying surface (1) comprises at least one chassis (2) and at least one seat/lying surface (3) coupled to the chassis (2) and equipped with the seat/lying surface (7), wherein the chassis (2) has at least two wheel rods (4) and running wheels (5) connected to the wheel rods (4), and wherein each of the movably interconnected seat/lying surface elements (7a, 7b, 7c, 7d) is coupled to the chassis (2) via at least one frame strut.

11. Seat/lying carriage (1) according to claim 9 or 10, wherein each wheel bar (4) is rotatable about an axis of rotation (DA) of the connected running wheels (5) and is equipped with at least one coupling device arranged outside the axis of rotation (DA) for coupling the frame struts, wherein a rotation (R) of the wheel rods (4) can be generated by a rotational movement (D) of the running wheels (5) and wherein, by means of the coupling of the frame struts to the coupling devices of the wheel rods (4), the generated rotation (R) of the wheel rods (4) is converted into counter-rotating, upward and downward movements (VI, V2) of the at least two seat/lying surface elements (7a, 7b, 7c, 7d) movably connected to one another.

12. Seat/lying carriage according to one of claims 9 to 11, wherein the seat/lying device (3) is in the form of an animal body (6) with a torso (6a) forming a seating region, wherein the movably interconnected seat/lying surface elements (7a, 7b, 7c, 7d) are formed as movably interconnected torso sections, wherein the animal body (6) is in particular a horse body, wherein a horse gait can be adjusted by means of the movement of the torso sections, which is generated due to the travel movement of the seat/lying carriage (1) and is directed towards one another.

13. Chair, in particular for use in physiotherapy treatments, comprising a seat/lying surface according to any one of claims 1 to 8.

## Revendications

1. Support d'assise/de couchage (7) comprenant au moins quatre éléments de support d'assise/de couchage (7a, 7b, 7c, 7d) reliés de manière mobile les uns aux autres et au moins un élément de palier (8.1, 8.2, 8.3, 8.4), dans lequel l'élément de palier (8.1, 8.2, 8.3, 8.4) est relié aux éléments de support d'assise/de couchage (7a, 7b, 7c, 7d) de telle manière qu'un mouvement des éléments de support d'assise/de couchage (7a, 7b, 7c, 7d) puisse être généré les uns par rapport aux autres, dans lequel la liaison des éléments de palier avec les éléments de support d'assise/de couchage est prévue et conçue afin de déplacer les éléments de support d'assise/de couchage les uns par rapport aux autres de sorte qu'une personne assise ou couchée soit incitée à compenser par activation de la musculature propre au corps les mouvements du support d'assise/de couchage,
**caractérisé en ce que**
chacun des éléments de support d'assise/de couchage (7a, 7b, 7c, 7d) reliés de manière mobile les uns aux autres est relié par le biais respectivement au moins d'un élément de liaison élastique, en particulier d'un élément en caoutchouc, à une partie inférieure sphérique, dans lequel la partie inférieure sphérique est logée de manière mobile dans une coque en forme de sphère creuse et la coque en forme de sphère creuse est reliée à au moins un élément vertical pour le placement sur un support.

2. Support d'assise/de couchage selon la revendication 1, dans lequel un élément de palier (8.1, 8.2, 8.3, 8.4) sert d'appui pour les éléments de support d'assise/de couchage (7).

3. Support d'assise/de couchage selon la revendication 1 ou 2, dans lequel il s'agit pour le déplacement des éléments de support d'assise/de couchage d'un mouvement ascendant et descendant qui comportent aussi des composantes de déplacement horizontales.

4. Support d'assise/de couchage (7) selon l'une des revendications précédentes, dans lequel les éléments de support d'assise/de couchage (7a, 7b, 7c, 7d) sont reliés les uns aux autres de manière mobile par le biais d'éléments (10) élastiques prévus à cet effet, en particulier par le biais d'éléments de ressort.

5. Support d'assise/de couchage (7) selon l'une des revendications précédentes, dans lequel il s'agit pour les éléments de palier (8.1, 8.2, 8.3, 8.4) d'entretoises de bâti d'une voiture à places assises/voiture couchette en particulier d'une poussette, de piliers ou d'éléments de liaison élastiques.

6. Support d'assise/de couchage (7) selon la revendication 1, dans lequel l'au moins un élément vertical est équipé d'un élément de ressort.

7. Support d'assise/de couchage (7) selon la revendication 1, dans lequel le support d'assise/de couchage (7) est relié à un dossier (16), dans lequel chacun des éléments de support d'assise/de couchage (7a, 7b, 7c, 7d) reliés les uns aux autres de manière mobile est relié à au moins un pilier pour le placement sur un support.

8. Support d'assise/de couchage (7) selon l'une des revendications 6 ou 7, dans lequel les piliers sont reliés à au moins un élément d'entraînement (19) de telle manière que les piliers puissent être amenés par l'élément d'entraînement (19) indépendamment l'un de l'autre dans un mouvement ascendant et descendant.

9. Voiture à places assises/voiture couchette (1) avec un support d'assise/de couchage (7) selon l'une des revendications 1 à 5.

10. Voiture à places assises/voiture couchette (1) selon la revendication 9, dans laquelle la voiture à places assises/voiture couchette (1) présente au moins un train de roulement (2) et au moins un dispositif d'assise/de couchage (3) équipé du support d'assise/de couchage (7) et couplé au train de roulement (2), dans lequel le train de roulement (2) présente au moins deux tiges de roue (4) et des roues de roulement (5) reliées aux tiges de roue (4), et dans laquelle chacun des éléments de support d'assise/de couchage (7a, 7b, 7c, 7d) reliés de manière mobile les uns aux autres est couplé par le biais d'au moins une entretoise de bâti au train de roulement (2).

11. Voiture à places assises/voiture couchette (1) selon la revendication 9 ou 10, dans laquelle chaque tige de roue (4) est rotative autour d'un axe de rotation (DA) des roues de roulement (5) reliées et est équipée d'au moins un dispositif de couplage agencé en dehors de l'axe de rotation (DA) pour le couplage des entretoises de bâti, dans lequel une rotation (R) des tiges de roue (4) peut être générée par un mouvement de rotation (D) des roues de roulement (5) et dans lequel au moyen du couplage des entretoises de bâti aux dispositifs de couplage des tiges de roue (4), la rotation (R) générée des tiges de roue (4) est convertie en mouvements ascendants et descendants (V1, V2) dans le sens inverse des au moins deux éléments de support d'assise/de couchage (7a, 7b, 7c, 7d) reliés l'un à l'autre de manière mobile.

12. Voiture à places assises/voiture couchette (1) selon l'une des revendications 9 à 11, dans laquelle le dispositif d'assise/de couchage (3) est réalisé sous la forme d'un corps animal (6) avec un torse (6a) formant une zone d'assise, dans lequel les éléments de support d'assise/de couchage (7a, 7b, 7c, 7d) reliés les uns aux autres de manière mobile sont réalisés comme sections de torse reliées les unes aux autres de manière mobile, dans lequel il s'agit pour le corps animal (6) en particulier d'un corps de cheval, dans lequel une allure de cheval est réajustée avec le mouvement généré en raison du mouvement de déplacement de la voiture à places assises/voiture couchette (1), dirigé l'un contre l'autre des sections de torse.

13. Chaise, en particulier pour l'utilisation dans des traitements physiothérapeutiques comprenant un support d'assise/de couchage selon l'une des revendications 1 à 8.
